# EUROPEAN PATENT APPLICATION

(11) **EP 2 965 711 A1**
(43) Date of publication of application: **13.01.2016**
(21) Application number: 15382358.8
(22) Date of filing: 06.07.2015
(51) Int. Cl.: A61C 8/00

(54) **DENTAL ABUTMENT, ABUTMENT AND SCREW ASSEMBLY, AND DENTAL IMPLANT SYSTEM**

(30) Priority: 10.07.2014 ES 201431034
(71) Applicant: Terrats Triquell, Montserrat, 08025 Barcelona (ES)
(72) Inventor: TERRATS TRIQUELL, Montserrat, 08025 BARCELONA (ES); TERRATS BES, Ramon, 08192 SANT QUIRZE DEL VALLÈS (ES); BOSCH BRILLAS, Amadeu, 08025 BARCELONA (ES)
(74) Representative: Sugrañes Patentes y Marcas

(57) **Abstract**

The invention relates to a dental abutment with internal connection to an implant and fixing by means of a fixing screw. The abutment is provided, apically at the connection end thereof with anti-rotation means for positioning and fixing the orientation of the abutment with respect to the implant, and with a through hole configured for the passage therethrough of the fixing screw, the axis of which extends in the longitudinal direction to the apical connection end. The anti-rotation means comprise a plurality of longitudinal protrusions separated from each other which extend in the direction parallel to the axis of the through hole at the apical connection end, the protrusions being equidistant with respect to said axis and being configured as merlons such that the separation space between two adjacent protrusions is connected to the through hole.

## Description

### Technical sector of the invention

The present invention relates to a dental prosthetic abutment, such as a pillar of cicatrisation, a prosthetic pillar, an impression tray, etc., which are coupled by an internal connection to a dental implant and are fixed by means of a fixing screw. The abutment is provided with anti-rotation means for positioning and fixing the orientation of the abutment with respect to the implant to which it is intended to be connected.

The invention also relates to a dental abutment and fixing screw assembly, as well as to a dental implant system which comprises the cited assembly and a corresponding dental implant.

### Background of the invention

The osseointegration capacity of titanium has been well-known since the middle of the 20^{th} century and from the studies published by the professor, Per-Ingvar Brånemark, therefore said characteristic has enabled a multitude of reconstruction solutions for lost dental pieces, notably improving the masticatory capacity in addition to the evident aesthetic improvement for the patients, based on one or more implants fixed to the mandibular bone, which support the superstructure or visible part of the prosthesis.

In the case of the loss of a single piece, the solution involves the insertion of a single implant, which supports a corona or visible part, whether it is ceramic, ceramic metal, screwed or cemented. In the case of two or more consecutive lost dental pieces, the solution consists of two or more implants osseointegrated to the mandibular or maxilla bone, on which an arch bridge or segment is fixed, being able to become the complete substitution for the entire dental arch.

Whatever the chosen solution, from among implants anchored to the mandibular bone and the visible dental structure, in the majority of cases and as a joining nexus between the both, intervention of a specific prosthetic abutment is required.

At present, the dental prosthetic abutments which are offered on the market have a wide range of sizes, shapes, angles and other characteristics which make them suitable for one application or another, configured with the capacity for connection at one end to the implant for which they are intended and at the other end with individual geometries for supporting the dental superstructure which must be fixed on them, whether by means of a screwed joining or by cementation.

A fundamental characteristic of any dental abutment is the geometry or form of the connection which joins it to the implant for which it is designed. Especially for the cases of single element, both the implant and the abutment which fits on the same, are provided with anti-rotation means which prevents the rotation of one element with respect to the other to prevent the dental corona rotating on itself, which would mean failure of the desired function for which the abutment is conceived.

The cited function of anti-rotation fixing is frequently achieved by means of a polygonal geometric figure and its negative figure, which form a connection or male-female type assembly which blocks the rotation of the abutment with respect to the implant. In addition to the cited simple polygonal forms (hexagonal, octagonal...etc.), other manufacturers use profiles formed by various lobes and cavities distributed peripherally around the longitudinal axis of the implant. As examples of these configurations, the publications of the patent application EP1021996-A1 and the patent US5195892 are cited. The formation of these simple or complex geometric figures requires considerable radial space, taking into account the reduced dimensions of a dental implant.

Other manufacturers, with the aim of minimising the diametric dimensions of the connection, opt for another type of anti-rotation connection, consisting of a succession of grooves and protrusions which extend longitudinally with respect to the axis of the connection of the implant, formed, for example on the exterior surface of the end of the abutment and on the interior surface of the implant, respectively. These grooves and protrusions are assembled one inside the other during the fitting, thus achieving the intended function of avoiding the rotation between the implant and the abutment, such as for example is described in the patent ES2443516-T3. However, and due to the mentioned space limitation, occasionally implants are manufactured which for assembly with their corresponding abutments, require screws formed by two welded pieces, in which a piece with the thread cutting is welded to the shaft piece of the screw, which adds a more fragile element to the system and the risk of the thread breaking off the shaft and being housed in the interior of the implant with the consequent problems which it would cause.

The need for achieving possible better fixing between the abutment and the implant in the reduced radial space available is brought to light, in which the so-called "internal connections" which are those in which in the coupling thereof, the abutment penetrates into the interior of the implant.

In order to configure an internal connection, normally a cylindrical, conical longitudinal portion or a combination of both is called for, in addition to an element which conditions the radial position of the abutment with respect to the implant, providing the desired anti-rotation effect.

Among the problems which can arise in these types of connections are those of loosening or breakage of the screw and, although less frequent, the breakage of the implant itself, triggered for reasons such as breakage due to fatigue or loosening, often produced by bruxism of the patient.

Thus, it would be desirable for the connections between abutments and implants to minimize or eradicate the cited problems.

### Description of the invention

With the aim of providing a solution to the drawbacks set out, a dental abutment is made known configured at one of its ends for the internal connection to a dental implant and for the fixing to the same by means of a fixing screw. The abutment is provided, apically at its connection end, with anti-rotation means for positioning and fixing the orientation of the abutment with respect to the implant to which it is intended to be connected, and of a through-hole configured for the passage therethrough of the fixing screw, the axis of which extends in the longitudinal direction to the apical connection end.

In essence, the dental abutment is characterised in that the anti-rotation means comprise a plurality of longitudinal protrusions separated from each other, which extend in the direction parallel to the axis of the through hole at the apical connection end, the protrusions being equidistant with respect to said axis and being configured as merlons such that the separation space between two adjacent protrusions is connected to the through hole.

It should be mentioned that the dental abutment, by its morphology, can be one of the so-called "pillars of cicatrisation" or another element belonging to the range of abutments, such as straight or angled prosthetic pillars, scannable, provisional impression trays, etc.

According to another characteristic of the invention, the assembly of all the interior surfaces of the protrusions, orientated towards the axis of the through hole, is inscribed in an imaginary cylindrical envelope with the same diameter as the through hole.

According to another characteristic of the invention, the assembly of all the exterior surfaces of the protrusions is inscribed in an imaginary cylindrical envelope concentric with respect to the imaginary envelope of the interior surfaces.

The abutment allows for a connection design adaptable to certain implant models standardised on the market, specifically, to those that base their anti-rotation means on longitudinal notches or grooves, where the panel and hollow parts of the implant and of the abutment, respectively, are inserted into each other.

According to another characteristic of the invention, the through-hole comprises a diametric enlargement in the manner of a seat for the fixing screw at the end opposed to the connection end of the abutment.

According to another characteristic of the invention, the connection end comprises a first section with cylindrical exterior surface arranged after the apical area in which the protrusions are arranged and a second section with tapered or cylindrical exterior surface arranged between the first section and the end opposed to the connection end.

According to another characteristic of the invention, the diameter of the through-hole along the first section and the second section of the connection end is constant.

According to another characteristic of the invention, the thickness of the cylindrical wall of the first section of the connection end is constant and equal to the thickness of the protrusions, measured as the distance between the interior and exterior surfaces thereof.

According to another characteristic of the invention, the second section of the connection end has a tapered exterior surface with an angle between its generatrix and its axis of symmetry of between 1 ° and 45°.

According to another characteristic of the invention, the end opposed to the connection end forms part of a head section, provided internally in its apical area with the diametric enlargement of the through hole, the diameter of the through hole which passes through the rest of the head section being equal to the diameter of the through hole at the connection end.

According to another characteristic of the invention, the contour of the transversal section of each protrusion is formed by two concentric circumference sections, opposed and joined to each other by two straight sections with shorter length and parallel to the radius which would divide the circumference sections in two equal halves. Alternatively, according to another embodiment, the two concentric circumference sections can be joined to each other by two straight sections with shorter length orientated according to a respective radial direction with respect to the circumference sections. The transversal section of each protrusion is understood to be the section according to a cut plan perpendicular to the axis of the through hole, and therefore, according to a cut plan which is perpendicular to the longitudinal axes of the protrusions.

According to a second aspect of the invention, a dental abutment and fixing screw assembly is made known, which is characterised in that the dental abutment is an abutment such as that previously described and in that the fixing screw is a screw with one single piece which comprises a shank with a diameter corresponding to the diameter of the through hole of the abutment, the shank being rounded off at one end by a thread cutting area with a thread diameter equal to the diameter of the shank, and at the other end by a head, the fixing screw and the abutment being two pieces separated and removably couplable to each other, that is to say, the two pieces are separately couplable to each other.

According to another characteristic of the assembly, object of the invention, the dental abutment comprises an enlargement such as that which has been described above, and the diameter of which corresponds to the diameter of the head of the fixing screw.

According to another characteristic of the assembly, object of the invention, the length of the fixing screw is greater than the length of the through hole of the abutment, such that in an operative position in which the head of the screw is seated in the enlargement of the through hole, the thread cutting area is arranged below the protrusions of the abutment.

According to a third aspect of the invention, a dental implant system is made known which comprises a dental implant, a dental abutment and a fixing screw, in which the implant is provided with a blind longitudinal perforation adapted for the internal connection to the abutment, provided at the closed end with an internal thread cutting area intended to receive a corresponding thread cutting of the fixing screw.

In essence, the implant system is characterised in that the dental abutment and the fixing screw constitute an abutment and screw assembly such as that described previously and in that the blind axial perforation of the dental implant comprises anti-rotation means complementary to the anti-rotation means of the dental abutment, formed by a plurality of longitudinal housings separated from each other, configured as grooves, which extend in the direction parallel to the axis of the blind longitudinal perforation of the implant with a transversal section adapted for the fitting of the corresponding protrusions of the anti-rotation means of the abutment.

According to another characteristic of the system, object of the invention, the blind longitudinal perforation of the implant comprises a first cylindrical section with a diameter adapted for receiving with adjustment the first section of the connection end of the abutment, and a second cylindrical section with a diameter less than that of the first and adapted for receiving with adjustment part of the shank of the fixing screw, followed by the internal thread cutting area in which the blind longitudinal perforation ends, these cylindrical sections being connected by a transition area in which the plurality of longitudinal housings is arranged and in which the length of the housings is greater than the length of the longitudinal protrusions of the abutment.

According to another characteristic of the invention, the longitudinal housings are configured with a flat seat in the transversal direction, the width of which, measured in the radial direction of the blind longitudinal perforation of the implant, is equal to the difference between the diameters of the first cylindrical section with respect to the second cylindrical section, the longitudinal housings being separated from each other by respective longitudinal openings with the same length as the housings which extend towards the axis of the blind longitudinal perforation until leaving a through diameter equal to the diameter of the second cylindrical section.

According to a characteristic of the invention, the blind longitudinal perforation of the implants comprises at its open end a third tapered section corresponding to the second section of the connection end of the abutment, followed by the first cylindrical section.

The abutment, object of the invention, as part of the implant system previously described, provides an effective solution to the problems posed, since it allows work to be carried out with a maximum diameter of the fixing screw thanks to the reduced radial thickness of the anti-rotation elements. It should also be mentioned that the length of the longitudinal protrusions is a comparatively short length with respect to the transversal dimension thereof, for the purposes of security against fragility.

In order to achieve the maximum diameter of the fixing screw, in the dental abutment, object of the invention, the measurement of the longitudinal through hole of the abutment has been increased such that the solid nucleus of the anti-rotation portion, which other abutments of the prior art have, has been eliminated, thus achieving longitudinal protrusions configured as isolated circular merlons, around the geometric axis of the implant. This merlon form and the dimensions thereof constitute an essential part of the present invention, serving to ensure the increase of the diameters of the screws and that of the passage of the abutment are to the detriment of the radial thickness of the cited merlons.

This approach prioritises the reliability of the coupling by means of a higher tightening torque of the screw, it being understood that the function of the longitudinal protrusions configured as merlons is to position the abutment with respect to the implant, minimising the possibility of loosening or breakage, given that if one of these circumstances exist, the robustness of the anti-rotation elements has no purpose.

In addition, even being of reduced radial thickness, if the cited merlons have a suitable length and are favoured by the curved circumferential transversal section thereof, similar to that of a tile, they offer the rigidity required for the success of the implant system. It is important to insist that in the present invention, in addition to increasing the diameter of the screw with respect to that which the current prior art offers, the cited screw is one single piece, which implies a very significant advantage over welded alternatives.

Another significant difference is that the fixing screw of the system according to the invention is separable from the abutment, thus allowing a much more efficient fitting on the implant than the systems of the prior art, in which the screw remains captive with respect to the abutment, the two ends of the screw being captive, that is to say, the head and the threaded bushing (cutting area of the screw) welded to the end opposing the head with greater diameter than the through hole of the abutment such that the cited screw of the prior art is only provided with a limited possibility for longitudinal displacement.

### Brief description of the drawings

In the drawings attached, a preferred embodiment of the dental abutment, object of the invention, is depicted in an illustrative and non-limiting manner, as well as preferred embodiments of a screw and implant which constitute the system, also object of the invention. Furthermore, the components of an abutment, screw and implant system representative of the prior art are also depicted for comparative purposes. In said drawings:
Fig. 1 is a longitudinal sectional view of the abutment, object of the invention;
Fig. 2 is a frontal view of the abutment of Fig. 1;
Fig. 3 is a bottom view of the abutment of Fig. 1 seen from its lower connection end to an implant;
Fig. 4 is a longitudinal sectional view of an implant intended to be connected to the abutment of Fig. 1, particularly according to the A-A cut of Fig. 5;
Fig. 5 is a plan view of the implant of Fig. 4;
Fig. 6 is a frontal view of a screw for the assembly of the abutment and the implant of Figs. 1 and 4 respectively;
Fig. 7 is a longitudinal sectional view of the abutment of Fig. 1 fitted on the implant of Fig. 4 prior to the insertion of the screw of Fig. 6;
Fig. 8 is a longitudinal section in partial view of the system, object of the invention, formed by the abutment of Fig. 1 fitted on the implant of Fig. 4 and joined by the screw of Fig. 6;
Fig. 9 is a plan view of the system of Fig. 8;
Fig. 10 is a sectional view of the system, object of the invention according to the cut B-B indicated in Fig. 8;
Fig. 11 is an expanded view of the detail C of Fig. 10;
Fig. 12 is a frontal view of an abutment representative of the prior art;
Fig. 13 is a bottom view of the abutment of Fig. 12, representative of the prior art, seen from its lower connection end to an implant;
Fig. 14 is a frontal view of a first component piece of a screw of those used for the assembly of the abutment of Fig. 12 with an implant representative of the prior art;
Fig. 15 is a partially sectioned view of the second piece, particularly a threaded bushing, a component of the screw which is composed together with the first piece of Fig. 14;
Fig. 16 is a longitudinal section in partial view of a system representative of the prior art, formed by the abutment of Fig. 13 fitted on a corresponding implant and joined to the latter by the screw composed of the welded pieces of Fig. 14 and 15;
Fig. 17 is an expanded view of the detail E of Fig. 16;
Fig. 18 is a sectional view of the system of Fig. 16 according to the cut D-D' indicated in Fig. 16; and
Fig. 19 is an expanded view of the detail F of Fig. 18.

### Detailed description of the drawings

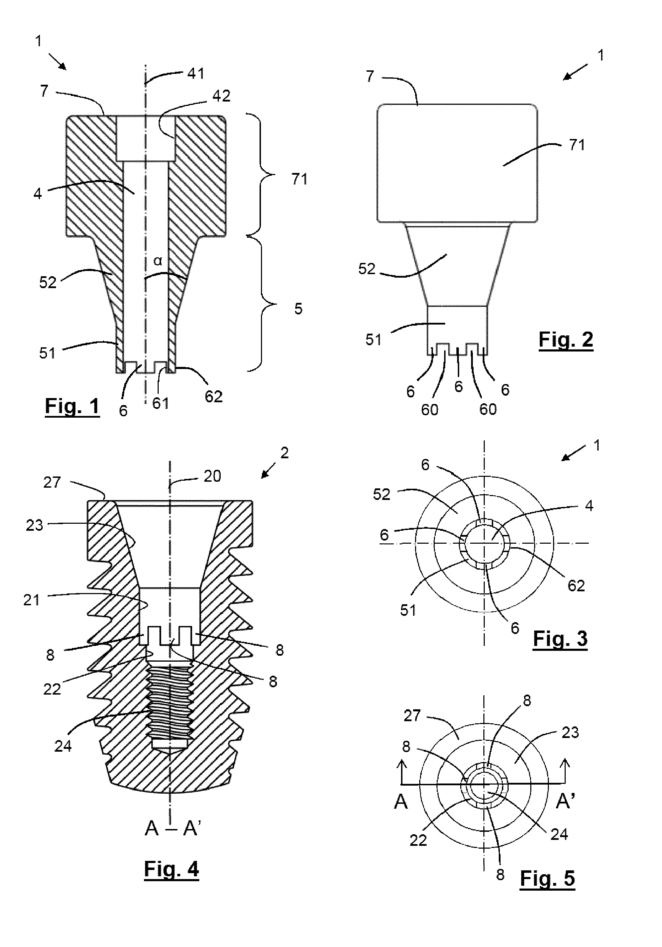

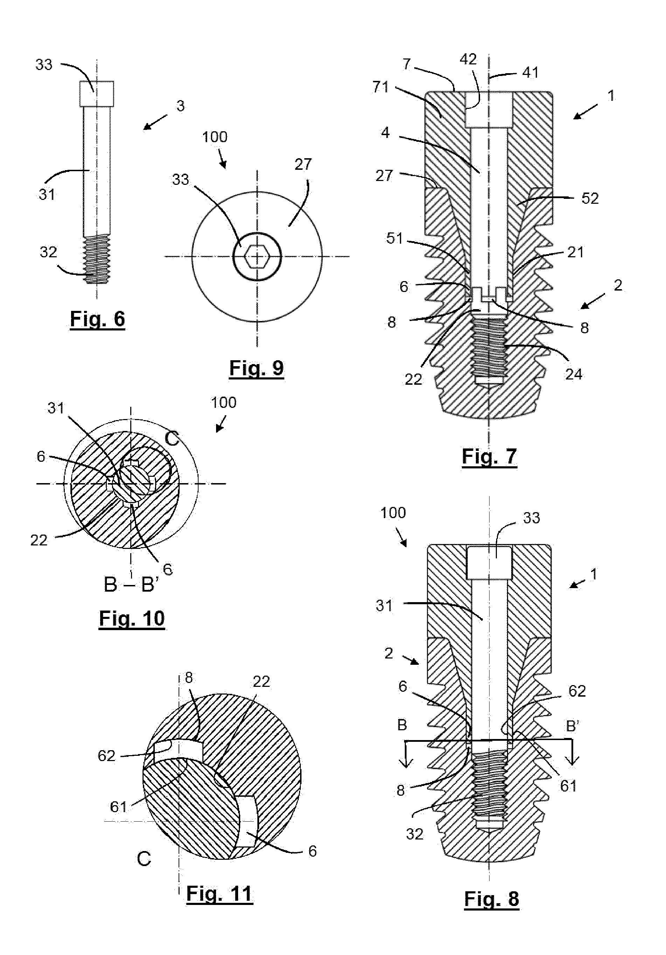

In Figs. 1 to 3, a dental abutment 1 is shown configured at one of its ends (connection end 5) for the internal connection to a dental implant 2 (such as that of Fig. 4) and for the fixing of the same by means of a fixing screw 3 (such as that of Fig. 6), these three components forming an implant system 100 such as that of Figs. 7 and 8.

The abutment 1 is provided, apically at the connection end 5 thereof with anti-rotation means for positioning and fixing the orientation of the abutment 1 with respect to the implant 2 to which it is intended to be connected and with a through hole 4 configured for the passage therethrough of the fixing screw 3. The axis 41 of the through hole 4 extends in the longitudinal direction to the apical connection end 5.

In the Figs. 1 and 2, it is observed that the connection end 5 of the dental abutment 1 comprises a first section 51 with cylindrical exterior surface and a second section 52, according to the preferred embodiment of the depicted abutment 1 with a tapered exterior surface (although in other embodiments this second section 52 can also be cylindrical) arranged between the first section 51 and the end 7 opposed to the connection end 5. The second section 52 has an angle α between its generatrix and its axis of symmetry between 1° and 45°. Particularly in Fig. 1, it can be seen that the diameter of the through hole 4 in the first section 51 and in the second section 52 of the connection end 5 is constant. The end 7 opposed to the connection end 5 forms part of a head section 71, provided internally in its apical area with a diametric enlargement 42 of the through hole 4, in the manner of a seat for the fixing screw 3. In fact, the enlargement 42 has the diameter required for receiving the head 33 of the fixing screw 3 of Fig. 6. In the Figs. 1 and 2, the head section 71 has a cylindrical form, although according to the function of the abutment 1, the head section 71 can be configured according to other forms, for example a tapered form with a vertical or inclined axis, etc.

The screw 3 is a single piece and comprises a shank 31 with a diameter corresponding to the diameter of the through hole 4 of the abutment 1, rounded off at one end with the head 33 of the screw and at the other end with a thread cutting area 32. In Fig. 9, it can be observed that the head 33 comprises a hexagonal housing, although according to other embodiments the housing can be a square form, of a torx type or any other form adapted for the screwing tool. It is important to point out that in the fixing screw 3, the thread cutting area 32 has the same diameter as the shank 31 which allows a greater tightening torque and confers maximum robustness on the assembly formed by the abutment 1 and the screw 3 (see Fig. 8). Thus the fixing screw 3 and the abutment 1 are two pieces which are separate and removably couplable to each other.

The anti-rotation means of the abutment 1 comprise a plurality of longitudinal protrusions 6 separated from each other, which extend in the direction parallel to the axis 41 of the through hole 4 at the apical connection end, the protrusions 6 being equidistant with respect to said axis 41 and being configured as merlons such that the separation space 60 (see Figs. 1 and 2) between two adjacent protrusions is connected to the through hole 4.

In Figs. 3 and 11, it can be observed that the assembly of all the interior surfaces 61 of the protrusions 6, orientated towards the axis 41 of the through hole 4 is inscribed in an imaginary cylindrical envelope with the same diameter as that of the through hole 4. Similarly, the assembly of all the exterior surfaces 62 of the protrusions 6 is inscribed in an imaginary cylindrical and concentric envelope with respect to the imaginary envelope of the interior surfaces 61. The contour of the transversal section of each protrusion 6 is formed by two concentric circumference sections, opposed and joined to each other by two straight sections of shorter length and parallel to the radius which would divide the circumference sections in two equal halves. Thus, the longitudinal protrusions have a form similar to that of a tile, only with shorter length in order to avoid problems of fragility.

In Fig. 1, it is shown that the thickness of the protrusions 6, measured as the distance between the interior 61 and exterior 62 surfaces thereof, is noticeably equal to the thickness of the cylindrical wall of the first section 51 of the abutment 1.

In Figs. 4 and 5, the dental implant 2 on which the abutment 1 is fitted and connected internally and to which it is fixed by way of the fixing screw 3 is shown. The implant 2 is provided with a blind longitudinal perforation adapted for the internal connection to the abutment 1, provided at the closed end with an internal thread cutting area 24 intended to receive the corresponding thread cutting 32 of the fixing screw 3, as indicated in the system 100 of Fig. 8.

In Figs. 4 and 5, it is indicated that the blind axial perforation of the implant 2 comprises anti-rotation means complementary to the anti-rotation means of the abutment 1, formed by a plurality of longitudinal housings 8 separated from each other, configured as grooves, which extend in the direction parallel to the axis 20 of the blind longitudinal perforation of the implant 2. The transversal section of the housings 8 is adapted for the fitting of the corresponding protrusions 6 of the anti-rotation means of the abutment 1 (see Figs. 7 to 11).

In Figs. 4, 7 and 8 it is shown that the blind longitudinal perforation of the implant 2 comprises a first cylindrical section 21 with a diameter adapted for receiving with adjustment the first section 51 of the connection end 5 of the abutment 1 and a second cylindrical section 22 with a diameter less than the first and adapted for receiving with adjustment part of the shank 31 of the fixing screw 3. The second section 22 is followed by the internal thread cutting area 24 in which the blind longitudinal perforation of the implant 2 ends and in which the screw 3 is threaded. In addition, the open end of the blind longitudinal perforation, surrounded by the support base 27 is configured by a third tapered section 23 corresponding to the second section 52 of the connection end 5 of the abutment 1 followed by the first cylindrical section 21. Between the first and second cylindrical sections 21 and 22, there is a transition area in which the plurality of longitudinal housings 8 of the anti-rotation means of the implant 2 is arranged.

It should be pointed out that the length of the housings 8 is greater than the length of the longitudinal protrusions 6 of the abutment 1, as shown in Figs. 7 and 8 in which it can be seen that below the edge of the longitudinal protrusions 6 there is an unfilled space inside the housings 8. The longitudinal housings 8 are configured with a flat seat in the transversal direction, the width of which, measured in the radial direction of the blind longitudinal perforation of the implant 2, is equal to the difference between the diameters of the first cylindrical section 21 with respect to the second cylindrical section 22. The longitudinal housings 8 are separated from each other by respective longitudinal openings, with a length equal to the housings 8, which extend towards the axis 20 of the blind longitudinal perforation until leaving a through diameter equal to the diameter of the second cylindrical section 22 (see Figs. 5, 10 and 11).

Particularly, Fig. 11, corresponding to the expanded detail C of Fig. 10, shows the section of the cut carried out to the height where the connection of the longitudinal protrusions 6 of the abutment 1 are located, configured as merlons, with the longitudinal housings 8, configured as hollows or grooves in the implant 2. In the expanded detail, two of the four protrusions 6 are seen, which are secured between the solid section of the shank 31 of the screw 3 and the housings 8 formed in the implant 2 in the form of notches or grooves. In this section, the robustness of the system 100 is shown, in spite of the small radial dimension of the longitudinal protrusions 6, which are reinforced by the geometry in the form of a tile and by being firmly secured between the screw 3 and the implant 2.

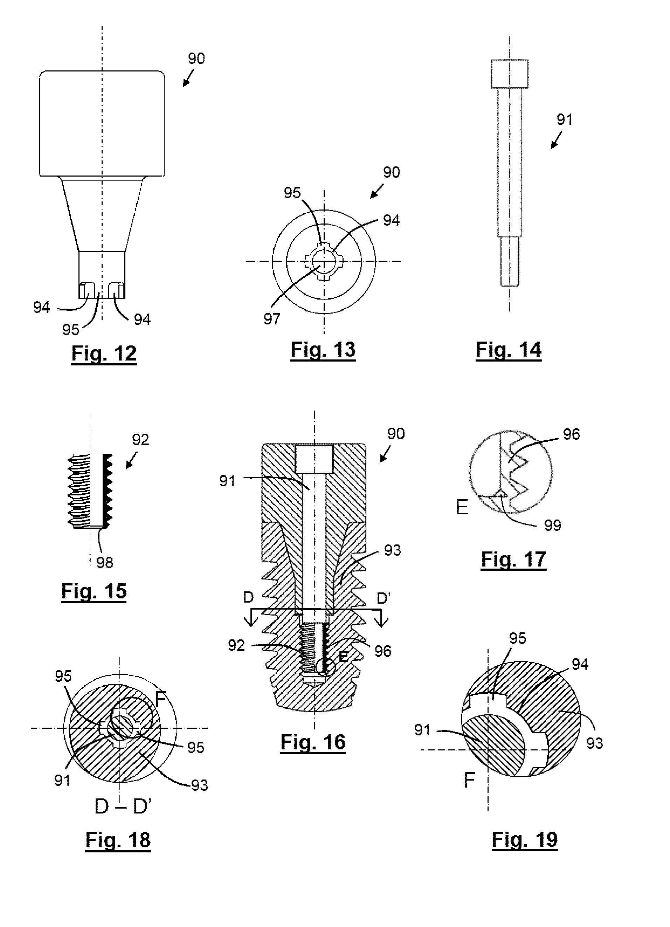

In Figs. 12 to 19, the components of an implant system representative of the aforementioned prior art are depicted, for the purposes of pointing out the differences between the abutment 1 and of the system 100, object of the invention and previously described. Thus, in Figs. 12 and 13, an abutment 90 of the prior art is shown, where instead of the longitudinal protrusions 6 of the abutment 1, the connection profile where the anti-rotation means are provided is formed by a cylinder on which longitudinal grooves 94 have been formed, which in turn produce panels 95 between two grooves 94. These hollows formed by the grooves 94 and the panels 95 match a similar geometry on the implant 93 (see Figs. 16 to 19) which allows the coupling thereof, thus preventing the rotation of one element with respect to the other. This conception requires a smaller diameter of the bore or through hole which the abutment passes 93 through and consequently a smaller diameter of the screw itself with shank 91 (see Figs. 13, 14 and 16).

In Fig. 14, the fixing screw is shown, provided with a shank 91, rounded off at its ends by a smaller cylinder around which is welded the threaded bushing 92 of Fig. 15. This execution involves, firstly the introduction of the body of the screw in the interior of the abutment 90, once assembled (see Fig. 16), the smaller cylinder sticks out through the lower end which smaller cylinder serves as the nucleus for the threaded bushing 92, and a small portion of the shank 91 or intermediate diameter of the screw. The size of this portion constitutes the longitudinal play of the screw once welded, which remains captive in the abutment 90. It should be added that this solution, in which the length of the thread is less than the width or longitudinal play of the screw inside the abutment 90, necessarily involves the action of screwing simultaneously to the action of placing together the anti-rotation elements, which in view of the environment in which this work is carried out, the mouth of a patient, involves an added difficulty. In Fig. 15, the threaded bushing 92 is shown partially sectioned, visualising the exterior thread, the bore or through hole where the smaller cylinder of the screw is housed and the chamfer 98, which subsequent to its fitting, is filled with welding.

In Fig. 16, the assembly of the system representative of the prior art is shown, formed by the abutment 90, the implant 93 and the screw with shank 91 and welded threaded bushing 92. In Fig. 16, the cut D-D is indicated, through which sectioning is carried out in order to obtain Fig. 18 and the detail E which is expanded in Fig. 17. Thus in Fig. 17, the end of the screw is shown, assembled in the fitted assembly, where the interior thread of the implant 91, the threaded bushing 92, the end of the screw and the welding 99 which joins the last two can be observed.

In Fig. 19, the expansion of the section D-D' shown in Fig. 18 is visualised.

It is shown that the section of the body of the screw (of components shown in Figs. 14 and 15) is smaller than that represented in the image Fig. 11. Thus it is brought to light that in the implant system 100, thanks to the fact that the abutment 1 allows a greater diameter of the fixing screw 3, the assembly is more robust and secure.

## Claims

1. Dental abutment (1) configured at one of its ends for internal connection to a dental implant (2) and for the fixing to the same by means of a fixing screw (3), wherein the abutment is apically provided at its connection end (5) with anti-rotation means for positioning and fixing the orientation of the abutment with respect to the implant (2) to which it is intended to be connected, and with a through hole (4) configured for the passage therethrough of the fixing screw, the axis (41) of which extends in the longitudinal direction to the apical connection end, (5) **characterised in that** the anti-rotation means comprise a plurality of longitudinal protrusions (6) separated from each other, which extend in the direction parallel to the axis (41) of the through hole (4) at the apical connection end (5), the protrusions (6) being equidistant with respect to said axis and being configured as merlons such that the separation space (60) between two adjacent protrusions (6) is connected to the through hole (4).

2. Dental abutment (1) according to claim 1, wherein the assembly of all the interior surfaces (61) of the protrusions (6), orientated towards the axis (41) of the through hole (4) is inscribed in an imaginary cylindrical envelope with the same diameter as the through hole (4).

3. Dental abutment (1) according to claim 2, wherein the assembly of all the exterior surfaces (62) of the protrusions (6), is inscribed in an imaginary cylindrical and concentric envelope with respect to the imaginary envelope of the interior surfaces (61).

4. Dental abutment (1) according to claim 3, wherein the through hole (4) comprises a diametric enlargement (42) in the manner of a seat for the fixing screw (3) at the end (7) opposed to the connection end (5) of the abutment (1) and wherein the connection end (5) comprises a first section (51) with cylindrical exterior surface arranged after the apical area in which the protrusions (6) are arranged and a second section (52) with tapered or cylindrical exterior surface arranged between the first section (51) and the end opposed (7) to the connection end.

5. Dental abutment (1) according to claim 4, wherein the diameter of the through hole (4) in the first section (51) and in the second section (52) of the connection end (5) is constant.

6. Dental abutment (1) according to claim 5, wherein the thickness of the cylindrical wall of the first section (51) of the connection end (5) is constant and equal to the thickness of the protrusions (6) measured as the distance between the interior (61) and exterior (62) surfaces thereof.

7. Dental abutment (1) according to any one of claims 4 to 6, wherein the second section (52) of the connection end (5) has a tapered exterior surface with an angle (α) between its generatrix and its axis of symmetry of between 1° and 45°.

8. Dental abutment (1) according to any one of claims 4 to 7, wherein the end opposed (7) to the connection end (5) forms part of a head section (71) provided internally in its apical area with the diametric enlargement (42) of the through hole (4), the diameter of the through hole (4) through which the rest of the head section (71) passes being equal to the diameter of the through hole (4) at the connection end (5).

9. Dental abutment (1) according to any one of the preceding claims, wherein the contour of the transversal section of each protrusion (6) is formed by two concentric circumference sections, opposed and joined to each other by two straight sections with shorter length and parallel to the radius which would divide the circumference sections into two equal halves or the contour of the transversal section of each protrusion (6) is formed by two concentric circumference sections, opposed and joined to each other by two straight sections with shorter length orientated according to a respective radial direction with respect to the circumference sections.

10. Dental abutment (1) and fixing screw (3) assembly, **characterised in that** the dental abutment (1) is an abutment according to any one of claims 1 to 9 and **in that** the fixing screw (3) is a single-piece screw which comprises a shank (31) with a diameter corresponding to the diameter of the through hole (4) of the abutment, the shank (31) being rounded off at one end by a thread cutting area (32) with a thread diameter equal to the diameter of the shank (31) and at the other end by a head (33), the fixing screw (3) and the abutment (1) being two pieces which are separate and separably couplable to each other.

11. Dental abutment (1) and fixing screw (3) assembly according to claim 10, wherein the dental abutment (1) is an abutment according to claim 4, wherein the diameter of the enlargement (42) of the through hole (4) of the abutment (1) corresponds to the diameter of the head (33) of the fixing screw (3) and wherein the length of the fixing screw (3) is greater than the length of the through hole (4) of the abutment (1) such that in an operative position in which the head (33) of the screw (3) is seated in the enlargement (42) of the through hole (4), the thread cutting area (32) is arranged below the protrusions (6) of the abutment (1).

12. Dental implant system (100) which comprises a dental implant (2), a dental abutment (1) and a fixing screw (3), in which the implant (2) is provided with a blind longitudinal perforation adapted for the internal connection to the abutment (1), provided at the closed end of the internal thread cutting area (24) intended to receive a corresponding thread cutting (32) of the fixing screw (3), **characterised in that** the dental abutment (1) and the fixing screw (3) constitute an abutment (1) and fixing screw (3) assembly according to claim 11 and **in that** the blind axial perforation of the dental implant (2) comprises anti-rotation means complementary to the anti-rotation means of the dental abutment (1), formed by a plurality of longitudinal housings (8) separated from each other, configured as grooves, which extend in the direction parallel to the axis (20) of the blind longitudinal perforation of the implant (2) with a transversal section adapted for the fitting of the corresponding protrusions (6) of the anti-rotation means of the abutment (1).

13. Dental implant system (100) according to claim 12, wherein the dental abutment (1) is an abutment according to claim 4, wherein the blind longitudinal perforation of the implant (2) comprises a first cylindrical section (21) with a diameter adapted for receiving with adjustment the first section (51) of the connection end (5) of the abutment (1), and a second cylindrical section (22) with a diameter less than the first one and adapted for receiving with adjustment part of the shank (31) of the fixing screw (3), followed by the internal thread cutting area (24) in which the blind longitudinal perforation ends, these cylindrical sections (21, 22) being connected by a transition area in which the plurality of longitudinal housings (8) is arranged and in which the length of the housings (8) is greater than the length of the longitudinal protrusions (6) of the abutment (1).

14. Dental implant system (100) according to claim 13, wherein the longitudinal housings (8) are configured with a flat seat in the transversal direction, the width of which, measured in the radial direction of the blind longitudinal perforation of the implant (2), is equal to the difference between the diameters of the first cylindrical section (21) with respect to the second cylindrical section (22), the longitudinal housings (8) being separated from each other by respective longitudinal openings with a length equal to the housings which extend towards the axis (20) of the blind longitudinal perforation until leaving a through diameter equal to the diameter of the second cylindrical section (22).

15. Dental implant system (100) according to claim 14, wherein the blind longitudinal perforation of the implant (2) comprises at the open end thereof a third tapered section (23) corresponding to the second section (52) of the connection end (5) of the abutment (1) followed by the first cylindrical section (21).
